# EUROPEAN PATENT APPLICATION

(11) **EP 4 753 095 A1**
(43) Date of publication of application: **03.06.2026**
(21) Application number: 25215415.8
(22) Date of filing: 12.11.2025
(51) Int. Cl.: H02J 3/14, B60L 53/63, B60L 55/00, H02J 3/32

(54) **CONTROL SYSTEM AND CONTROL METHOD**

(30) Priority: 13.11.2024 JP 2024198069
(71) Applicant: Toyota Jidosha Kabushiki Kaisha, Toyota-shi, Aichi-ken 471-8571 (JP)
(72) Inventor: NAKAMURA, Tohru, TOYOTA-SHI, AICHI-KEN, 471-8571 (JP)
(74) Representative: Cabinet Beau de Loménie

(57) **Abstract**

A control system controls an amount of power demand indicating an amount of electric power supplied from an external power supply (PG) to a supply target (1). The supply target includes a first resource (100, 220) and a second resource (210, 220, 230, 241) configured to allow adjustment of the amount of power demand. The control system includes a first controller (111, 12A) that controls the first resource and a second controller (12, 12B) that controls the second resource. The first controller controls the first resource independently of the second controller. Upon satisfaction of a first start condition, one of the first resource and the second resource starts a first adjustment operation to suppress increase in amount of power demand (F1, F2A). Upon further satisfaction of a second start condition in addition to the first start condition, the other of the first resource and the second resource starts a second adjustment operation to suppress increase in amount of power demand (F2, F1A, F2B, F2C, F2D).

## Description

### CROSS REFERENCE TO RELATED APPLICATIONS

This nonprovisional application is based on Japanese Patent Application No. 2024-198069 filed with the Japan Patent Office on November 13, 2024, the entire contents of which are hereby incorporated by reference and to which the person of the art can refer when considering the present disclosure.

### BACKGROUND

### Field

The present disclosure relates to a control system that controls an amount of power demand and a control method of controlling an amount of power demand.

### Description of the Background Art

Japanese Patent Laying-Open No. 2024-054667 discloses a technique of adjustment by a server, of supply and demand of electric power in a power grid with the use of batteries at a battery station. Specifically, the battery station holds a replacement battery replaceable with a vehicle-mounted battery. The server performs, with the use of the replacement battery, power feed (external power feed) to the power grid and charging (external charging) with electric power from the power grid.

### SUMMARY

According to the technique described in Japanese Patent Laying-Open No. 2024-054667, supply and demand of electric power is adjusted only with the use of the battery station. Supply and demand of electric power, on the other hand, may be adjusted with the use not only of the battery station but also of other resources. For example, a battery station may be introduced in a facility (for example, an office) including air-conditioning equipment and supply and demand of electric power may be adjusted with the use of the battery station and the air-conditioning equipment. Coordination, however, between a controller that controls existing equipment (for example, air-conditioning equipment) and a controller that controls an added battery station, however, is not necessarily easy. In a controller of this type, a control logic thereof is often made a black box and is not externally seen. Therefore, in adjustment of supply and demand of electric power with the use of a plurality of resources, control by both of the controllers may interfere and use of the resources may be restricted more than necessary.

The present disclosure was made to solve the problem above, and an object thereof is to provide a control system and a control method that allow appropriate control of an amount of power demand with the use of a plurality of resources controlled by controllers different from each other.

According to a first point of view of the present disclosure, a control system shown below is provided.

The control system is configured to control an amount of power demand indicating an amount of electric power supplied from an external power supply to a supply target. The supply target includes a first resource and a second resource configured to allow adjustment of the amount of power demand. The control system includes a first controller that controls the first resource and a second controller that controls the second resource. The first controller is configured to control the first resource independently of the second controller. Upon satisfaction of a first start condition, one of the first resource and the second resource starts a first adjustment operation to suppress increase in amount of power demand. Upon further satisfaction of a second start condition in addition to the first start condition, the other of the first resource and the second resource starts a second adjustment operation to suppress increase in amount of power demand.

In the control system, while the first start condition is satisfied and the second start condition is not satisfied, only the first adjustment operation is performed. When the second start condition in addition to the first start condition is further satisfied, the second adjustment operation is performed. According to such control, without coordination between the first controller and the second controller, the amount of power demand is appropriately controlled with the use of each resource. The control system can basically suppress increase in amount of power demand by performing the first adjustment operation, and can perform the second adjustment operation as necessary. Thus, restriction of use of the resource more than necessary is suppressed. The control system can appropriately control the amount of power demand with the use of a plurality of resources (the first resource and the second resource) controlled by controllers different from each other.

The external power supply may be a power network (for example, a microgrid or a large-scale power network provided as an infrastructure) or a large-capacity energy storage system (ESS). The external power supply may supply alternating-current (AC) power or direct-current (DC) power. The supply target may be a facility such as an office, a house such as an apartment house, or a location where a resource provides a service (for example, a parking lot where power feed equipment and/or a battery station are/is provided). Each resource at the supply target provides adjustment capability to the supply target. Adjustment capability means general capability of adjustment of electric power (frequency control, adjustment of supply-and-demand balance, or the like) and includes also reserve.

According to a second point of view of the present disclosure, a control method shown below is provided.

The control method is a method of controlling an amount of power demand indicating an amount of electric power supplied from an external power supply to a supply target. The supply target includes a first resource and a second resource configured to allow adjustment of the amount of power demand. The control method includes starting, by one of the first resource and the second resource, a first adjustment operation to suppress increase in amount of power demand upon satisfaction of a first start condition, and starting, by the other of the first resource and the second resource, a second adjustment operation to suppress increase in amount of power demand upon further satisfaction of a second start condition in addition to the first start condition.

According to the control method, similarly to the control system described previously, the amount of power demand can appropriately be controlled with the use of a plurality of resources controlled by controllers different from each other.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram showing a configuration of a control system according to an embodiment of the present disclosure.
Fig. 2 is a diagram for illustrating a battery station shown in Fig. 1.
Fig. 3 is a flowchart showing a control method according to the embodiment of the present disclosure.
Fig. 4 is a diagram for illustrating an exemplary operation by each resource at a facility shown in Fig. 1.
Fig. 5 is a diagram showing a method of changing a first expression used in processing shown in Fig. 3.
Fig. 6 is a flowchart showing a first modification of the processing shown in Fig. 3.
Fig. 7 is a flowchart showing a second modification of the processing shown in Fig. 3.
Fig. 8 is a flowchart showing details of electric power control shown in Fig. 7.
Fig. 9 is a diagram showing a modification of a first threshold value and a second threshold value shown in Fig. 4.
Fig. 10 is a diagram showing a first modification of a configuration of the facility shown in Fig. 1.
Fig. 11 is a diagram showing a second modification of the configuration of the facility shown in Fig. 1.
Fig. 12 is a flowchart showing a third modification of the processing shown in Fig. 3.
Fig. 13 is a flowchart showing a fourth modification of the processing shown in Fig. 3.

### DESCRIPTION OF THE PREFERRED EMBODIMENTS

An embodiment of the present disclosure will be described in detail with reference to the drawings. The same or corresponding elements in the drawings have the same reference characters allotted and description thereof will not be repeated.

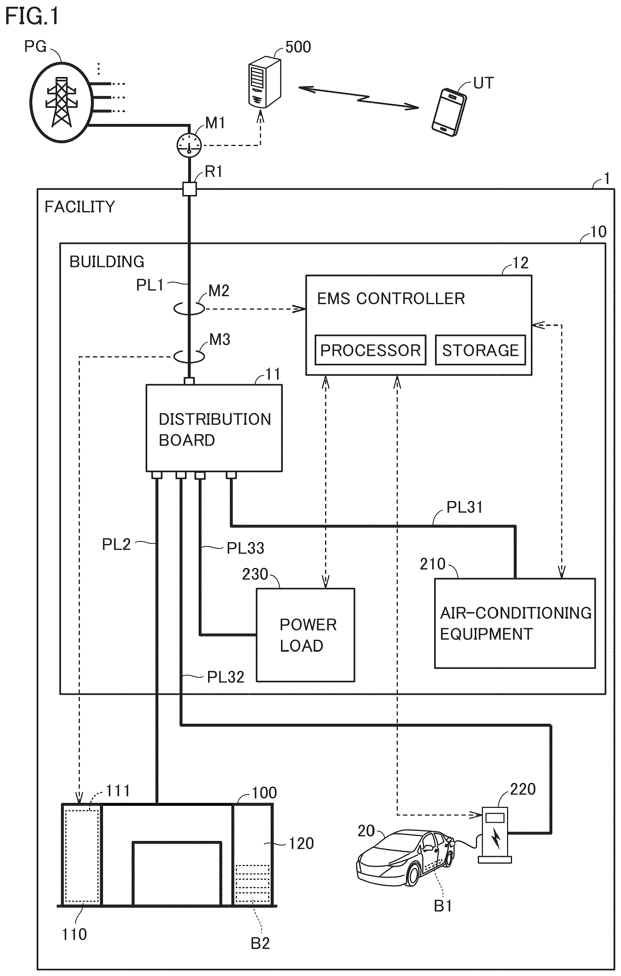

Fig. 1 is a diagram for illustrating a configuration of a control system according to this embodiment. Referring to Fig. 1, the control system according to this embodiment is mounted on a facility 1. Facility 1 includes a building 10. Building 10 includes a distribution board 11, an energy management system (EMS) controller 12, air-conditioning equipment 210, and a power load 230. Air-conditioning equipment 210 is configured to perform air-conditioning (for example, adjustment of at least one of a temperature, a humidity, cleanliness, and a flow of air) in building 10. Power load 230 includes at least one electrical appliance used in building 10. Power load 230 may include at least one of a lighting apparatus, an elevator, a heater, a refrigerator, communication equipment, a display, and information processing equipment.

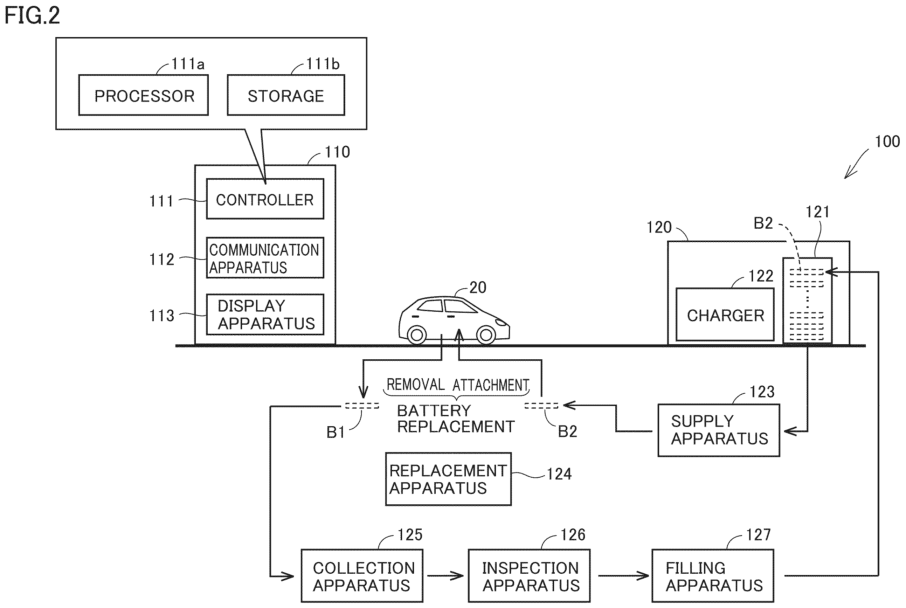

Facility 1 further includes a battery station 100 and electric vehicle supply equipment (EVSE, power feed equipment for a vehicle) 220 provided outdoors. EMS controller 12 is a computer communicatively connected to each of air-conditioning equipment 210, EVSE 220, and power load 230. EMS controller 12 includes a processor and a storage. Battery station 100 includes a management unit 110 and a battery storage portion 120. Management unit 110 includes a controller 111 that controls various apparatuses of battery station 100. Controller 111 is a computer mounted on battery station 100. Details of a configuration of battery station 100 will be described later (see Fig. 2). Facility 1 is an office such as a vehicle sales office (dealer). Without being limited as such, facility 1 may be other commercial facilities (a department store, a roadside rest facility, a factory, and the like), a public facility, or a residence. In this embodiment, controller 111 and EMS controller 12 correspond to an exemplary "first controller" and an exemplary "second controller" according to the present disclosure, respectively.

A power grid PG supplies electric power to each of a plurality of supply targets including facility 1. Facility 1 receives at a power reception point R1, electric power supplied from power grid PG. Power reception point R1 is electrically connected to power grid PG. Power grid PG is a power network constructed by power transmission and distribution facilities. Power grid PG may include power generation equipment and transform equipment. Facility 1 and power grid PG correspond to an exemplary "supply target" and an exemplary "external power supply" according to the present disclosure, respectively.

A manager of facility 1 receives supply of electric power from an energy service provider (ESP) such as an electric utility. In this embodiment, the manager of facility 1 corresponds to a consumer under contract with the ESP. A server 500 functions as a terminal of the ESP. A terminal UT functions as a terminal of the manager of facility 1. In this embodiment, a smartphone equipped with a touch panel display is adopted as terminal UT. Application software for power management of facility 1 is installed in terminal UT. Terminal UT is configured to communicate with each of EMS controller 12 and battery station 100 (controller 111). Terminal UT is not limited to the smartphone but may be a tablet terminal or a wearable device, or a stationary computer.

Electric power of power grid PG is supplied in accordance with demand. Therefore, an amount of electric power (amount of supplied electric power) supplied from power grid PG to the power reception point matches with an amount of power consumption at that power reception point. Server 500 measures an amount of electric power supplied from power grid PG to each of a plurality of power reception points (including a power reception point R1) and determines electricity fees for each power reception point (for each consumer). A watt-hour meter is provided at each power reception point. For example, a watt-hour meter M1 (for example, a smart meter) is provided at power reception point R1 of facility 1. The amount of electric power supplied from power grid PG to facility 1 is successively measured by watt-hour meter M1. Watt-hour meter M1 successively transmits the measured amount of supplied electric power to server 500.

The ESP obtains a demand value for each power reception point and determines the electricity fees based on the demand value. In this embodiment, power grid PG supplies AC power categorized as "high voltage" or "extra high voltage" to power reception point R1 (facility 1). AC power categorized as "high voltage" has a voltage higher than 600 V and not higher than 7000 V. AC power categorized as "extra high voltage" has a voltage higher than 7000 V. Power reception point R1 includes power reception equipment adapted to supplied electric power (at high voltage or extra high voltage). The power reception equipment may include a switch, a transformer, and a protective relay on a high voltage side (primary side). The demand value at power reception point R1 corresponds to an integrated value (that is, the amount of supplied electric power per unit period) of amounts of electric power supplied from power grid PG to power reception point R1 (facility 1) in a unit period. Such a unit period is generally referred to as a "slot". A length of the unit period is determined, for example, based on rules on power trade or a contract between the ESP and the consumer. In this embodiment, the length of the unit period is set to thirty minutes. Server 500 may obtain the demand value every thirty minutes, for example, for power reception point R1, and may calculate the electricity fees based on the demand value largest within a prescribed period (for example, immediately preceding twelve months). The demand value largest within the prescribed period is referred to as a "maximum demand value" below. Server 500 may set higher electricity fees as the maximum demand value is larger. The length of the unit period can be changed as appropriate, without being limited to thirty minutes.

Server 500 bills the electricity fees calculated as above to the consumer. For example, server 500 sends a notice about billing of the electricity fees to terminal UT. In response to an operation by the user on terminal UT, electronic payment of the electricity fees may be made between terminal UT and server 500.

Electric power supplied from power grid PG to power reception point R1 (facility 1) may be referred to as "external electric power" below. Power reception point R1 is connected to distribution board 11 through a power line PL1. External electric power is inputted from power grid PG through power reception point R1 and power line PL1 to distribution board 11. Watt-hour meters M2 and M3 are provided at power line PL1. Each of watt-hour meters M2 and M3 detects the amount of electric power (amount of supplied electric power) supplied from power grid PG to power reception point R1 (facility 1). Watt-hour meter M2 is a watt-hour meter for EMS controller 12 and outputs a signal recognizable by EMS controller 12. Watt-hour meter M2 successively outputs a signal indicating a detection value of the amount of supplied electric power to EMS controller 12. Watt-hour meter M3 is a watt-hour meter for battery station 100. Watt-hour meter M3 outputs a signal recognizable by controller 111 of battery station 100. Watt-hour meter M3 successively outputs a signal indicating a detection value of the amount of supplied electric power to battery station 100 (controller 111).

Distribution board 11 distributes inputted external electric power to a plurality of circuits (secondary circuits) in facility 1. The secondary circuit may be protected by a fuse or a breaker. Distribution board 11 may include a circuit for processing (for example, power conversion and input and output adjustment) involved with power conditioning. In this embodiment, distribution board 11 distributes inputted external electric power to battery station 100, air-conditioning equipment 210, EVSE 220, and power load 230. Battery station 100, air-conditioning equipment 210, EVSE 220, and power load 230 are connected to distribution board 11 through power lines PL2, PL31, PL32, and PL33, respectively. Power line PL33 may be connected to at least one outlet provided in building 10. As a power cable of power load 230 is connected to the outlet, electric power may be supplied from distribution board 11 through the outlet to power load 230. EMS controller 12 may be activated by electric power from distribution board 11 or by another power supply (for example, a battery for drive).

A vehicle 20 includes a battery B1 and configured such that a battery B1 is chargeable, for example, with EVSE 220. Battery B1 in a form of a battery pack may be mounted on vehicle 20. Vehicle 20 is configured to travel with electric power outputted from battery B1. Vehicle 20 may include a motor that rotates a drive wheel thereof with output power from battery B1. Vehicle 20 includes an electronic control unit (ECU). Vehicle 20 may be a battery electric vehicle (BEV) without an internal combustion engine, a plug-in hybrid electric vehicle (PHEV) including an internal combustion engine, or another electrically powered vehicle (xEV).

EVSE 220 is configured to electrically be connectable to vehicle 20, for example, through a charging cable. In the example shown in Fig. 1, a tip end (connector) of the charging cable leading to EVSE 220 is connected (plugged in) to an inlet of vehicle 20, so that vehicle 20 and EVSE 220 are electrically connected to each other. The connector of the charging cable is configured to be attachable to and removable from the inlet of vehicle 20. EVSE 220 contains a computer configured to communicate with EMS controller 12. EVSE 220 is controlled by EMS controller 12. EVSE 220 is configured to charge with external electric power, battery B1 of vehicle 20 in a state electrically connected thereto. EVSE 220 performs charging of battery B1 in response to a request from a user of vehicle 20. EVSE 220 is configured to request vehicle 20 to discharge based on an instruction from EMS controller 12. Electric power discharged from battery B1 of vehicle 20 in the state electrically connected to EVSE 220 is inputted to distribution board 11 through EVSE 220. EVSE 220 is configured to change a destination of output of electric power (vehicle 20 or distribution board 11) and magnitude of output electric power based on an instruction from EMS controller 12. Distribution board 11 outputs electric power inputted from EVSE 220 to at least one of power lines PL31 and PL33.

Fig. 2 is a diagram for illustrating battery station 100. Referring to Fig. 2, battery station 100 holds a replacement battery replaceable with a vehicle-mounted battery, and is configured to provide the replacement battery. Battery station 100 may provide the replacement battery in response to a request from vehicle 20 (vehicle user). In this embodiment, battery station 100 is configured to remove battery B1 from vehicle 20 and to attach another battery B2 to vehicle 20. Battery B2 attached to vehicle 20 functions similarly to battery B1 (Fig. 1) in vehicle 20. Batteries B1 and B2 correspond to an exemplary "vehicle-mounted battery" and an exemplary "replacement battery" according to the present disclosure, respectively.

Battery station 100 according to this embodiment further includes a supply apparatus 123, a replacement apparatus 124, a collection apparatus 125, an inspection apparatus 126, and a filling apparatus 127, in addition to management unit 110 and battery storage portion 120. Battery storage portion 120 includes an accommodation portion 121 (for example, a storage) and a charger 122. In accommodation portion 121, a plurality of batteries B2 to be supplied to a vehicle are stored. Each of supply apparatus 123, collection apparatus 125, and filling apparatus 127 transports a battery. Any type of transport may be applicable, and a conveyor type or a type using a transport robot may be applicable.

Management unit 110 further includes a communication apparatus 112 and a display apparatus 113 in addition to controller 111. Controller 111 includes a processor 111a and a storage 111b. In storage 111b, information (an amount of power storage or the like) on each battery B2 stored in battery storage portion 120 is stored, as being distinguished based on identification information of the battery (battery ID). Controller 111 communicates with an external apparatus (for example, terminal UT shown in Fig. 1) through communication apparatus 112. Display apparatus 113 is, for example, a touch panel display. Display apparatus 113 shows information in accordance with an instruction from controller 111. Display apparatus 113 outputs information inputted from a user to controller 111.

Controller 111 controls battery replacement in response to a request from the user of vehicle 20. Specifically, supply apparatus 123 and replacement apparatus 124 replace battery B1 of vehicle 20 with battery B2, for example, in a procedure as below, in accordance with a command from controller 111. Replacement apparatus 124 removes battery B1 (used battery) from vehicle 20. In succession, supply apparatus 123 transports (supplies) battery B2 from accommodation portion 121 to replacement apparatus 124. In succession, replacement apparatus 124 attaches supplied battery B2 to vehicle 20. Replacement of the battery of vehicle 20 is thus completed.

Controller 111 controls reuse of the battery obtained from the vehicle. Specifically, collection apparatus 125, inspection apparatus 126, and filling apparatus 127 operate, for example, as below, in accordance with a command from controller 111. Battery B1 removed from vehicle 20 is collected by collection apparatus 125. Inspection apparatus 126 then inspects collected battery B1. Filling apparatus 127 fills accommodation portion 121 with battery B1 determined as an acceptable item in the inspection. Battery B1 filled in accommodation portion 121 is handled as battery B2. Batteries thus collected from vehicles are reused. Charger 122 charges battery B2 filled in accommodation portion 121 until an amount of power storage therein attains to a prescribed value or more. Battery B2 having the amount of power storage equal to or larger than the prescribed value can thus be provided to the vehicle. Battery B1 determined as a rejected item in the inspection may be reused in an application other than the vehicle-mounted battery or may be discarded.

A method of replacement of the vehicle-mounted battery is not limited to the above method. For example, a not-shown transport apparatus, movable block, or transport robot may move the vehicle and adjust a position of the vehicle. The user may attach the replacement battery provided by the battery station to the vehicle. Instead of replacement apparatus 124, the user may manually replace the battery.

In this embodiment, battery station 100 shown in Fig. 1 and an accessory thereof (power line PL2, watt-hour meter M3, or the like) correspond to equipment subsequently added to facility 1. Each piece of equipment (including air-conditioning equipment 210, EVSE 220, and power load 230) other than the former corresponds to existing equipment. The existing equipment is equipment provided in facility 1 before addition of battery station 100. Each of air-conditioning equipment 210, EVSE 220, and power load 230 is controlled by EMS controller 12. Battery station 100, on the other hand, is controlled by controller 111 and operates alone. The control logic of controller 111 is made a black box and not externally seen. Such a battery station 100 is advantageous in that it can operate alone as designed without coordination with another piece of equipment and that a malfunction thereof due to influence by another piece of equipment is less likely. Coordination between the controller (EMS controller 12) that controls the existing equipment and controller 111 that controls added battery station 100 in such a facility 1, on the other hand, is not necessarily easy. Therefore, in an example where facility 1 adjusts supply and demand of electric power of power grid PG with the existing equipment and added battery station 100, control by both of the controllers may interfere with each other and use of the resource (air-conditioning equipment 210, EVSE 220, power load 230, battery station 100, or the like) may be restricted more than necessary.

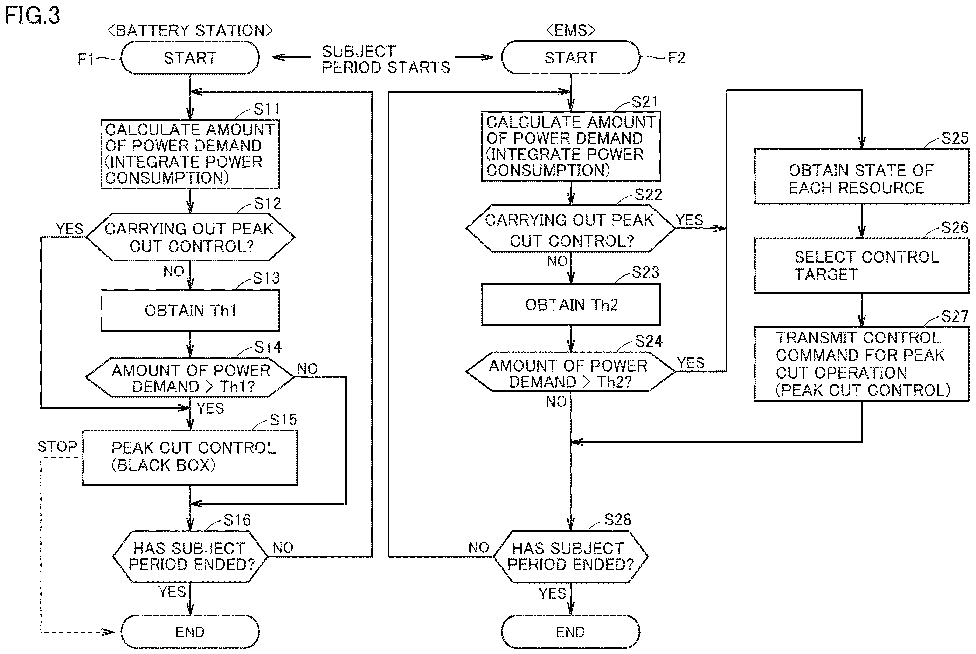

Facility 1 (supply target) according to this embodiment allows appropriate control of the amount of power demand with the use of a plurality of resources controlled by controllers different from each other, by performing a control method which will be described below. Specifically, controller 111 of battery station 100 shown in Fig. 2 and EMS controller 12 shown in Fig. 1 perform process flows F1 and F2 shown in Fig. 3, respectively. Fig. 3 is a flowchart showing the control method according to this embodiment. "S" in the flowchart represents a step.

As start time of a subject period comes, controller 111 starts process flow F1 and EMS controller 12 starts process flow F2. Each unit period (a period of thirty minutes) described previously is set as the subject period. Specifically, with a certain unit period (for example, 0:00 to 0:30) being set as the subject period, process flows F1 and F2 are performed, and when that subject period ends, a next unit period (for example, 0:30 to 1:00) is set as a new subject period. Process flows F1 and F2 are performed for the new subject period. Similarly also thereafter, a new subject period is set each time the subject period ends. Therefore, process flows F1 and F2 are basically continuously performed. The subject period is changed each time of lapse of thirty minutes. Process flows F1 and F2 are thus performed for each unit period, and the amount of power demand (demand value) for each unit period is adjusted. Process flows F1 and F2 will be described below.

In process flow F1 shown in Fig. 3, in S11, controller 111 obtains a detection value of the amount of supplied electric power from watt-hour meter M3 and calculates the amount of power demand indicating the amount of electric power supplied from power grid PG to facility 1. In this embodiment, an integrated value of amounts of electric power supplied from power grid PG to facility 1 (power reception point R1) in the subject period is calculated as the amount of power demand. Specifically, controller 111 calculates the amount of power demand by integrating amounts of supplied electric power (amounts of power consumption at facility 1) detected by watt-hour meter M3 in the subject period.

In succession, in S12, controller 111 determines whether or not peak cut control (S15) which will be described later has already been carried out. In a first-round processing routine immediately after start of the subject period, peak cut control has not yet been carried out, and hence determination as NO is made in S12 and the process proceeds to S13.

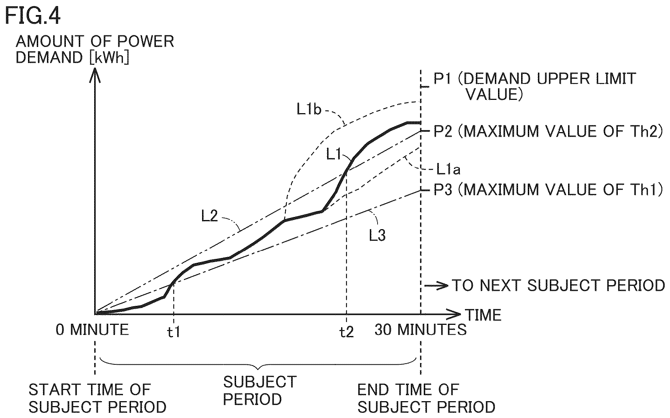

In S13, controller 111 obtains a first threshold value (which is denoted as "Th1" below). In this embodiment, controller 111 determines Th1 based on a first expression. Though details will be described later, the first expression expresses such relation that time elapsed in the subject period and Th1 are proportional at a first proportionality constant (see Fig. 4). In following S14, controller 111 determines whether or not the amount of power demand calculated in S11 exceeds Th1. Since the amount of power demand is small in the first-round processing routine immediately after start of the subject period, determination as NO is made in S14 and the process proceeds to S16. In S16, controller 111 determines whether or not the subject period has elapsed. In the first-round processing routine immediately after start of the subject period, end time of the subject period has not yet come, and hence determination as NO is made in S16 and the process returns to S11.

When the amount of power demand calculated in S11 exceeds Th1 within the subject period (YES in S14), in S15, controller 111 carries out peak cut control. Peak cut control in S15 is control to cause battery station 100 to perform a peak cut operation (first adjustment operation) to suppress increase in amount of power demand. In controller 111, however, a logic (for example, an algorithm) of peak cut control is made a black box and not externally seen.

As the processing in S15 is performed, the process proceeds to S16. In the subject period, determination as NO is made in S16 and the process returns to S11. After peak cut control is started in S15, however, determination as YES is made in S12 and the process proceeds to S15. Thus, processing in S13 and S14 is no longer performed in the subject period, whereas peak cut control (S15) is continuously carried out. After peak cut control is started in the subject period, processing in S11, S12, S15, and S16 is repeatedly performed.

As end time of the subject period comes, determination as YES is made in S16 and process flow F1 ends. The first adjustment operation based on peak cut control is thus no longer performed. When the end time of the subject period comes without the amount of power demand exceeding Th1, process flow F1 ends without peak cut control (S15) being carried out.

In process flow F2 shown in Fig. 3, in S21, EMS controller 12 obtains a detection value of the amount of supplied electric power from watt-hour meter M2 and calculates the amount of power demand described previously. Specifically, EMS controller 12 calculates the amount of power demand by integrating the amounts of supplied electric power (amounts of power consumption at facility 1) detected by watt-hour meter M2 in the subject period. In succession, in S22, EMS controller 12 determines whether or not peak cut control (S27) which will be described later has already been carried out. In the first-round processing routine immediately after start of the subject period, peak cut control has not yet been carried out, and hence determination as NO is made in S22 and the process proceeds to S23.

In S23, EMS controller 12 obtains a second threshold value (which is denoted as "Th2" below). Though details will be described later, Th2 is a value larger than Th1 (S13) (see Fig. 4). In this embodiment, EMS controller 12 determines Th2 based on a second expression. The second expression expresses such relation that time elapsed in the subject period and Th2 are proportional at a second proportionality constant. In following S24, EMS controller 12 determines whether or not the amount of power demand calculated in S21 exceeds Th2. Since the amount of power demand is small in the first-round processing routine immediately after start of the subject period, determination as NO is made in S24 and the process proceeds to S28. In S28, EMS controller 12 determines whether or not the subject period has elapsed. In the first-round processing routine immediately after start of the subject period, the end time of the subject period has not yet come, and hence determination as NO is made in S28 and the process returns to S21.

When the amount of power demand calculated in S21 exceeds Th2 in the subject period (YES in S24), in S25, EMS controller 12 obtains a state of each of air-conditioning equipment 210 and EVSE 220. In following S26, EMS controller 12 selects at least one of air-conditioning equipment 210 and EVSE 220 as a control target, for example, based on the state of each of air-conditioning equipment 210 and EVSE 220. In following S27, EMS controller 12 transmits a control command indicating a peak cut operation (second adjustment operation) to suppress increase in amount of power demand to the control target selected in S26. The resource that has received the control command performs the second adjustment operation.

As processing in S27 is performed, the process proceeds to S28. In the subject period, determination as NO is made in S28 and the process returns to S21. After peak cut control is started in S27, however, determination as YES is made in S22 and the process proceeds to S25. Thus, processing in S23 and S24 is no longer performed in the subject period, whereas peak cut control (S27) is continuously carried out. After peak cut control is started in the subject period, processing in S21, S22, and S25 to S28 is repeatedly performed.

When the end time of the subject period comes, determination as YES is made in S28 and process flow F2 ends. The second adjustment operation based on peak cut control is thus no longer performed. When the end time of the subject period comes without the amount of power demand exceeding Th2, process flow F2 ends without peak cut control (S27) being carried out.

Fig. 4 is a diagram for illustrating an exemplary operation by each resource at facility 1. In Fig. 4, a line L1 represents exemplary transition of the amount of power demand when control shown in Fig. 3 (process flows F1 and F2) is carried out in the subject period. A line L2 represents exemplary transition of Th2 based on the second expression. A line L3 represents exemplary transition of Th1 based on the first expression. "t" in a time chart represents timing.

The first expression is expressed as "Th1 = α×ET" and the second expression is expressed as "Th2 = β×ET" where "ET" represents time elapsed in the subject period, "α" represents the first proportionality constant, and "β" represents the second proportionality constant. As shown with lines L2 and L3, β is larger than α. In an example shown in Fig. 4, a length of the subject period is thirty minutes. Therefore, a maximum value of Th2 (which is denoted as "P2" below) is expressed as "P2 = β×30 minutes," and a maximum value of Th1 (which is denoted as "P3" below) is expressed as "P3 = α×30 minutes." P2 is larger than P3. of and β are set such that the amount of power demand does not exceed a demand upper limit value P1 in the subject period. α is set, for example, by the user. β is set, for example, by EMS controller 12. Demand upper limit value P1 may be set by the user. Alternatively, demand upper limit value P1 may be set by EMS controller 12 based on data on the amount of power demand in the past.

In the example shown in Fig. 4, the amount of power demand (line L1) for a period from the start time of the subject period until t1 is not larger than Th1 (line L3). In process flows F1 and F2 shown in Fig. 3, the amount of power demand is calculated in each of S11 and S21. In S13, controller 111 obtains latest Th1 based on the first expression, and in S14, it compares the amount of power demand with Th1.

At t1, the amount of power demand (line L1) exceeds Th1 (line L3). Thus, in S15 in Fig. 3, the first adjustment operation is started. As a result of the first adjustment operation, increase in amount of power demand is suppressed. During a period from t1 until t2, the amount of power demand (line L1) is larger than Th1 (line L3) and not larger than Th2 (line L2). Therefore, the first adjustment operation (S15 in Fig. 3) is performed, whereas the second adjustment operation (S27 in Fig. 3) is not performed. Thereafter, at t2, the amount of power demand (line L1) exceeds Th2 (line L2). Thus, in S27 in Fig. 3, the second adjustment operation is started and both of the first and second adjustment operations are performed. Therefore, as a result not only of the first adjustment operation but also of the second adjustment operation, increase in amount of power demand is suppressed.

As described above, the control method according to this embodiment includes each processing shown in Fig. 3. In the control system according to this embodiment, at least one processor executes a program stored in at least one memory to perform each processing. The processing may be performed only by hardware (electronic circuitry).

The control system according to this embodiment is configured to control the amount of power demand. The amount of power demand indicates the amount of electric power supplied from power grid PG (external power supply) to facility 1 (supply target). Facility 1 includes battery station 100. Facility 1 includes air-conditioning equipment 210, EVSE 220, and power load 230, and EMS controller 12 that controls the former. Each of battery station 100, air-conditioning equipment 210, EVSE 220, and power load 230 is configured to allow adjustment of the amount of power demand. Controller 111 of battery station 100 is configured to control battery station 100 (specifically, supply apparatus 123, replacement apparatus 124, collection apparatus 125, and the like shown in Fig. 2) independently of EMS controller 12. When the first start condition is satisfied, battery station 100 starts the first adjustment operation (peak cut operation) to suppress increase in amount of power demand. When the amount of power demand exceeds Th1 (first threshold value) (YES in S14 in Fig. 3), the first start condition is satisfied. When the second start condition in addition to the first start condition is further satisfied, at least one of air-conditioning equipment 210 and EVSE 220 starts the second adjustment operation (peak cut operation) to suppress increase in amount of power demand. When the amount of power demand exceeds Th2 (second threshold value) (YES in S24 in Fig. 3), the second start condition is satisfied. Th2 is larger than Th1. Therefore, when the second start condition is satisfied, the first start condition is also satisfied.

In the control system according to this embodiment, controller 111 and EMS controller 12 separately carry out control (process flows F1 and F2). According to process flows F1 and F2, without coordination between controller 111 and EMS controller 12, in other words, without exchange of a control command therebetween, the amount of power demand is appropriately controlled with the use of each resource.

According to the configuration, the control system can basically suppress increase in amount of power demand by performing the first adjustment operation and can perform the second adjustment operation as necessary. For example, as shown with a dashed line L1a in Fig. 4, when increase in amount of power demand is sufficiently suppressed by the first adjustment operation (S15 in Fig. 3) and the amount of power demand does not exceed Th2 in the subject period, the second adjustment operation (S27 in Fig. 3) is not performed. Restriction of use of the resource more than necessary is thus suppressed. In addition, according to the configuration, the first adjustment operation and the second adjustment operation are sequentially started based on increase in amount of power demand. Thus, even in such a form that the control logic of at least one of the first controller and the second controller is made a black box, excessive increase in amount of power demand can properly be suppressed.

In this embodiment, the first controller (controller 111) controls the first resource (battery station 100) to start the first adjustment operation upon satisfaction of the first start condition and to continue the first adjustment operation until satisfaction of the first end condition. In addition, second controller (EMS controller 12) controls the second resource (air-conditioning equipment 210 and/or EVSE 220) to start the second adjustment operation upon satisfaction of the first start condition and the second start condition and to continue the second adjustment operation until satisfaction of the second end condition. The first start condition is satisfied (see S14 in Fig. 3) when the amount of power demand exceeds Th1 (first threshold value). The first end condition is satisfied (see S16 in Fig. 3) when the subject period has elapsed. The second start condition is satisfied (see S24 in Fig. 3) when the amount of power demand exceeds Th2 (second threshold value) larger than Th1. The second end condition is satisfied (see S28 in Fig. 3) when the subject period has elapsed.

According to the configuration, excessive increase in amount of power demand in the subject period can properly be suppressed. Contents (control logic) of peak cut control by the first controller are made a black box. Therefore, the first end condition may be satisfied not only when the subject period has elapsed but also when another requirement is satisfied. Peak cut control may unexpectedly be stopped for some factor (see a dashed line in Fig. 3).

If peak cut control is stopped and consequently the first adjustment operation ends and increase in amount of power demand is not sufficiently suppressed, the amount of power demand increases and exceeds Th2 as shown with a dashed line L1b in Fig. 4. Thus, the second adjustment operation is performed instead of the first adjustment operation, and increase in amount of power demand is suppressed. Therefore, the amount of power demand exceeding demand upper limit value P1 in the subject period is suppressed.

In peak cut control (S15 in Fig. 3) by controller 111, controller 111 controls battery station 100 such that at least one of restriction (which is denoted as an "operation X1" below) of power consumption by battery station 100 and discharging (which is denoted as an "operation X2" below) by battery station 100, of electric power stored in the replacement battery to building 10 (distribution board 11) is performed. With operations X1 and X2, increase in amount of power demand can properly be suppressed. With decrease in amount of power consumption by battery station 100, the amount of supplied electric power from power grid PG to facility 1 also decreases. As electric power supplied from battery station 100 is used in facility 1, the amount of supplied electric power from power grid PG to facility 1 decreases. Battery station 100 corresponds to an exemplary "first resource" according to the present disclosure. Each of operations X1 and X2 corresponds to an exemplary "first adjustment operation" according to the present disclosure.

In operation X1, battery replacement by battery station 100 may be prohibited, or the number of times of replacement of the battery per unit time may be restricted to a prescribed number of times or smaller. Controller 111 may increase discharging power in operation X2 as the amount of power demand is larger. Though Fig. 1 shows only a single battery station, facility 1 may include a plurality of battery stations each of which operates independently. In peak cut control in S15 in Fig. 3, each of the battery stations may perform at least one of operations X1 and X2 to thereby suppress increase in amount of power demand.

In peak cut control (S27 in Fig. 3) by EMS controller 12, EMS controller 12 controls air-conditioning equipment 210 and EVSE 220 such that at least one of restriction (which is denoted as an "operation Y1" below) of power consumption by air-conditioning equipment 210, restriction (which is denoted as an "operation Y2" below) of power consumption by EVSE 220, and discharging (which is denoted as an "operation Y3" below) to building 10 (distribution board 11), of electric power stored in the battery of the vehicle connected to EVSE 220 is performed. With operations Y1 to Y3, increase in amount of power demand can properly be suppressed. With decrease in amount of power consumption by each resource at facility 1, the amount of supplied electric power from power grid PG to facility 1 also decreases. As electric power supplied from EVSE 220 is used in facility 1, the amount of supplied electric power from power grid PG to facility 1 decreases. Each of air-conditioning equipment 210 and EVSE 220 corresponds to an exemplary "second resource" according to the present disclosure. Each of operations Y1, Y2, and Y3 corresponds to an exemplary "second adjustment operation" according to the present disclosure.

In operation Y1, air-conditioning by air-conditioning equipment 210 may be prohibited. Alternatively, in operation Y1, each of an upper limit value and a lower limit value of a temperature set for air-conditioning equipment 210 may be set to be closer to a reference temperature (for example, a current outdoor air temperature). In operation Y2, charging by EVSE 220 may be prohibited, or output power from EVSE 220 may be restricted. EMS controller 12 may lower an upper limit value of output power from EVSE 220 in operation Y2 as the amount of power demand is larger. EMS controller 12 may increase discharging power in operation Y3 as the amount of power demand is larger. In S26 in Fig. 3, EMS controller 12 may determine a control target based on meteorological forecast information (for example, forecasted outdoor air temperature and weather) and a state (for example, a status of use and a status of reservation of each of air-conditioning equipment 210 and EVSE 220) of each resource. Though Fig. 1 shows one air-conditioning equipment and one power feed equipment, facility 1 may include a plurality of air-conditioning facilities and a plurality of power feed facilities controlled by EMS controller 12. Then in S26 in Fig. 3, at least one of them may be selected as the control target. In peak cut control in S27 in Fig. 3, the selected control target may perform at least one of operations Y1, Y2, and Y3 to thereby suppress increase in amount of power demand.

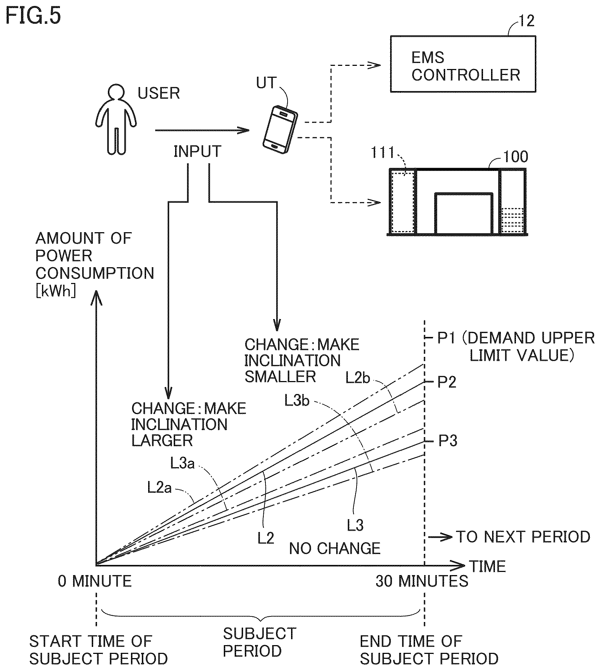

In this embodiment, controller 111 controls battery station 100 independently of EMS controller 12. EMS controller 12 controls air-conditioning equipment 210, EVSE 220, and power load 230 independently of controller 111. A control signal is not exchanged between controller 111 and EMS controller 12. Terminal UT (user terminal) is configured to communicate with each of EMS controller 12 and controller 111 through installed application software. Controller 111 may be configured to change the set first expression. Fig. 5 is a diagram for illustrating an example where the first proportionality constant (α) in the first expression is changed in accordance with a request from the user.

Referring to Fig. 5, terminal UT accepts a request for change of the first expression from the user. When the user makes the request for change of the first expression, terminal UT conveys the request for change of the first expression to each of EMS controller 12 and controller 111. Controller 111 changes the first proportionality constant in accordance with the request from the user. EMS controller 12 changes the second proportionality constant in accordance with change of the first proportionality constant. At this time, EMS controller 12 changes the second proportionality constant to be larger than the first proportionality constant. According to such a configuration, appropriate first and second threshold values are more readily set. The first proportionality constant (α) and the second proportionality constant (β) correspond to inclinations of the first expression and the second expression, respectively. In Fig. 5, lines L3 and L2 represent the first expression and the second expression when the first proportionality constant and the second proportionality constant are set to standard values, respectively. The standard value of each proportionality constant may be a default value.

For example, the request for change of the first expression may request the first proportionality constant to be larger than the standard value (line L3). Controller 111 increases the first proportionality constant as shown with a line L3a in Fig. 5, in response to such a request. In addition, EMS controller 12 increases the second proportionality constant as shown with a line L2a in Fig. 5, in response to such a request. Alternatively, the request for change of the first expression may request the first proportionality constant to be smaller than the standard value (line L3). Controller 111 decreases the first proportionality constant as shown with a line L3b in Fig. 5, in response to such a request. In addition, EMS controller 12 decreases the second proportionality constant as shown with a line L2b in Fig. 5, in response to such a request. The request for change of the first expression may request change of the first proportionality constant to a value designated by the user.

As set forth above, controller 111 changes the first proportionality constant in accordance with the request from the user. Controller 111, on the other hand, does not change the first expression unless it receives the request from the user. In other words, controller 111 is configured to change Th1 in response to an input from the user but not to change Th1 in response to an input from EMS controller 12. According to such a configuration, the user sets appropriate Th1 in controller 111, without relying on EMS controller 12. Such controller 111 is likely to appropriately suppress increase in amount of power demand by the first adjustment operation while the control logic thereof is hidden (made a black box).

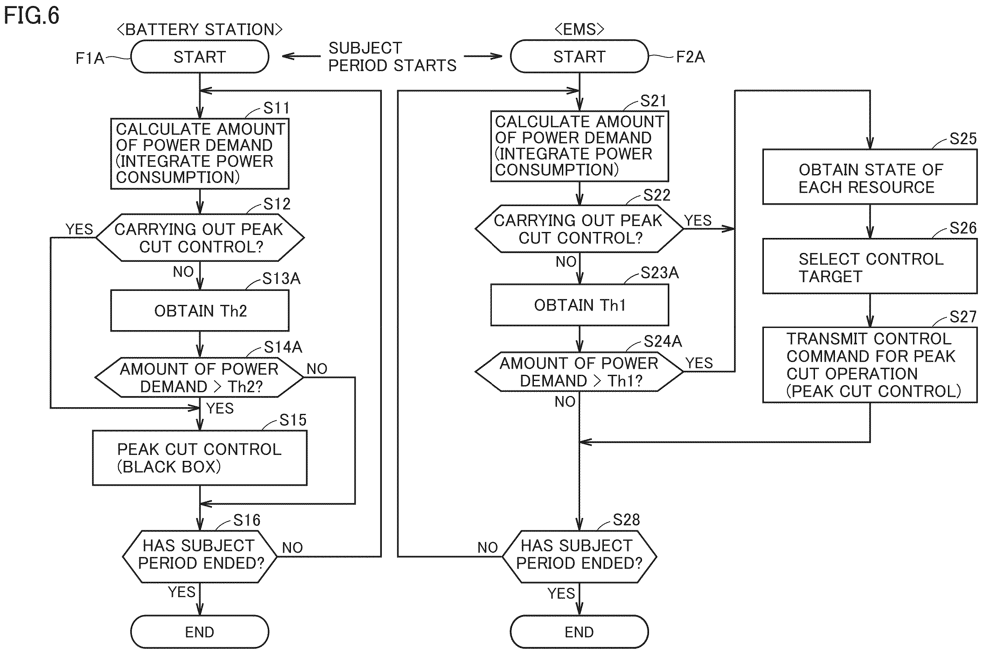

In the embodiment, the peak cut operation by the first resource (battery station 100) is started upon satisfaction of the first start condition. The peak cut operation by the second resource (air-conditioning equipment 210, EVSE 220) is started upon satisfaction of both of the first and second start conditions. In other words, the first resource preferentially suppresses increase in amount of power demand. Without being limited as such, the second resource may start the peak cut operation (adjustment operation) prior to the first resource. Fig. 6 is a flowchart showing a first modification of the processing shown in Fig. 3.

Referring to Fig. 6, in this modification, as the start time of the subject period comes, controller 111 starts a process flow F1A and EMS controller 12 starts a process flow F2A. Process flow F1A is the same as process flow F1 (Fig. 3) except that S13A and S14A are adopted instead of S13 and S14. Process flow F2A is the same as process flow F2 (Fig. 3) except that S23A and S24A are adopted instead of S23 and S24.

In process flow F2A, in S23A, EMS controller 12 obtains Th1, and in S24A, it determines whether or not the amount of power demand exceeds Th1. When the amount of power demand calculated in S21 exceeds Th1 (YES in S24A), EMS controller 12 performs processing in S25 to S27. The first adjustment operation based on peak cut control is thus started in S27. In process flow F1A, on the other hand, in S13A, controller 111 obtains Th2, and in S14A, it determines whether or not the amount of power demand exceeds Th2. When the amount of power demand calculated in S11 exceeds Th2 (YES in S14A), in S15, controller 111 starts the second adjustment operation based on peak cut control. Th1 and Th2 are set in a manner shown in Figs. 4 and 5. In other words, Th2 is larger than Th1.

In the modification, upon satisfaction of the first start condition (YES in S24A), in S27, at least one of air-conditioning equipment 210 and EVSE 220 starts the peak cut operation (first adjustment operation). The first adjustment operation is continued until satisfaction of the first end condition. When the end time of the subject period comes (YES in S28), the first end condition is satisfied. When the second start condition in addition to the first start condition is further satisfied (YES in S14A), in S15, battery station 100 starts the peak cut operation (second adjustment operation). The second adjustment operation is continued until the second end condition is satisfied. When the end time of the subject period comes (YES in S16), the second end condition is satisfied. The control system according to the modification can basically suppress increase in amount of power demand with the use of the second resource and can suppress increase in amount of power demand with the use of the first resource as necessary.

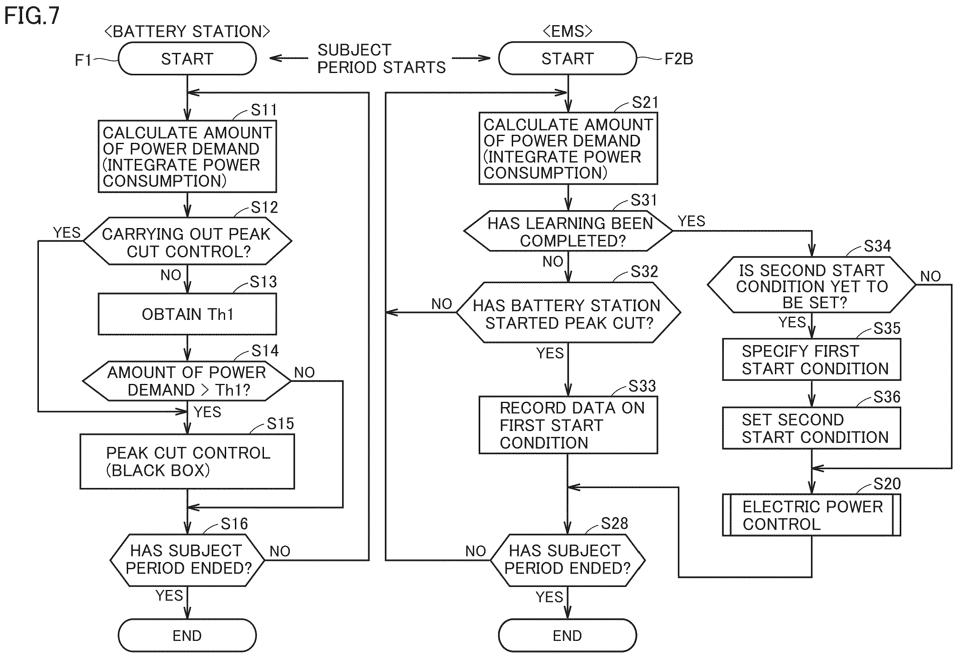

Depending on a battery station, not only contents (control logic) of peak cut control but also a condition for start of peak cut control may be made a black box. EMS controller 12 may be configured to specify the first start condition by learning operations by battery station 100 and to set the second start condition based on the specified first start condition. Fig. 7 is a flowchart showing a second modification of the processing shown in Fig. 3.

Referring to Fig. 7, in this modification, as the start time of the subject period comes, controller 111 starts process flow F1 (the same as process flow F1 shown in Fig. 3) and EMS controller 12 starts a process flow F2B. In process flow F2B, in S21, EMS controller 12 obtains a detection value of the amount of supplied electric power from watt-hour meter M2 and calculates the amount of power demand. In following S31, EMS controller 12 determines whether or not learning (S32 and S33 which will be described later) of operations by battery station 100 has been completed. Since learning has not yet been completed in the first-round processing routine immediately after start of the subject period, determination as NO is made in S31 and the process proceeds to S32. In S32, EMS controller 12 determines whether or not battery station 100 has started peak cut control (first adjustment operation), for example, based on the detection value from watt-hour meter M2. When determination as NO is made in S32, the process returns to S21. As battery station 100 starts peak cut control (YES in S32), in S33, EMS controller 12 records various types of data on the first start condition (for example, the first expression). The data recorded here is data at the start time of peak cut control (first adjustment operation) by battery station 100, and includes, for example, time elapsed since start of the subject period and the amount of power demand. As processing in S33 is performed, the process proceeds to S28.

In S28, EMS controller 12 determines whether or not the subject period has elapsed. In the subject period, determination as NO is made in S28 and the process returns to S21. Until data (for example, a prescribed number of pieces of data) sufficient for specifying the first start condition (for example, the first expression) is obtained in S33, determination as NO is made in S31 and processing (S32 and S33) involved with learning is repeatedly performed. When sufficient data is obtained in S33, determination as YES is made in S31 and the process proceeds to S34.

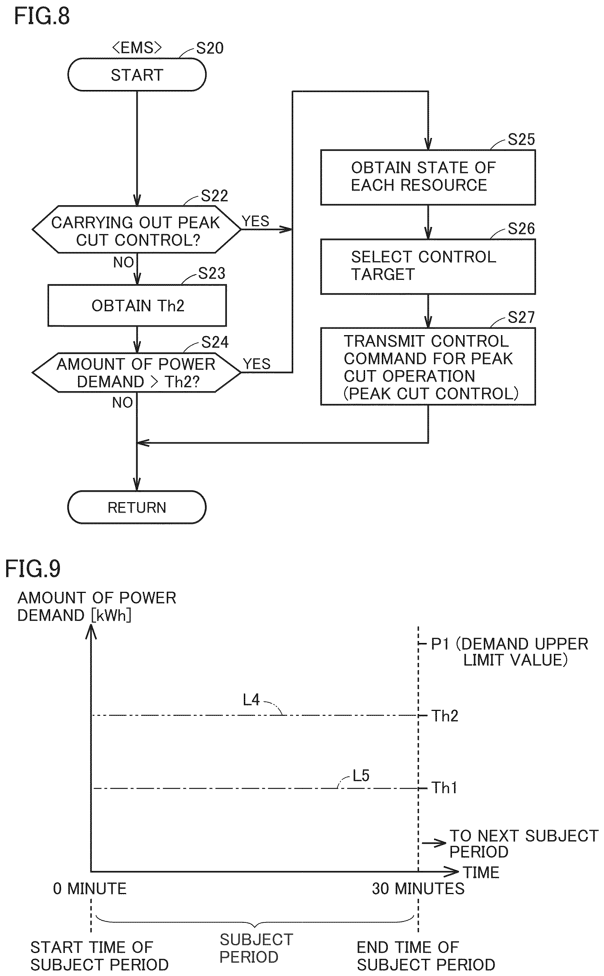

In S34, EMS controller 12 determines whether or not the second start condition is yet to be set. When the second start condition is yet to be set (YES in S34), the process proceeds to S35. In S35, EMS controller 12 specifies the first start condition set in battery station 100 based on the data obtained in S33. EMS controller 12 may specify α (first proportionality constant) in the first expression based on data (for example, time elapsed in the subject period and the amount of power demand) at the time of start of the first adjustment operation. In succession, in S36, EMS controller 12 sets the second start condition (for example, the second expression) based on the specified first start condition. EMS controller 12 may determine β (second proportionality constant) in the second expression based on of in the first expression and demand upper limit value P1 shown in Fig. 4, and set the obtained second expression. β in the second expression is larger than α in the first expression. Thereafter, the process proceeds to S20. In S20, electric power control shown in Fig. 8 is carried out.

Fig. 8 is a flowchart showing details of S20. As shown in Fig. 8, S20 is a process flow including S22 to S27 shown in Fig. 3. In S23, EMS controller 12 obtains Th2 based on the second expression set in EMS controller 12 in S36 in Fig. 7. When determination as NO is made in S24 or processing in S27 is performed as in process flow F2 shown in Fig. 3, the process proceeds to S28 in Fig. 7.

In process flow F2B shown in Fig. 7, as the second start condition is set, determination as NO is made in S34 and the process proceeds to S20, with S35 and S36 being skipped. S20 is repeatedly performed in the subject period. When the end time of the subject period comes (YES in S28), process flow F2B ends.

According to the control system according to the modification, an appropriate second start condition can be set in accordance with the first start condition specified by learning also when the first start condition is made a black box in battery station 100. When the first start condition is specified and the second start condition is set based on the first start condition in a certain subject period, EMS controller 12 does not have to perform learning for specifying the first start condition and setting of the second start condition in a subject period subsequent to the subject period. Alternatively, EMS controller 12 may perform learning for specifying the first start condition and setting of the second start condition every subject period, and may check the first start condition to set the second start condition every subject period.

It is not essential that Th1 (first threshold value) and Th2 (second threshold value) are set in the manner shown in Figs. 4 and 5. A relational expression between time elapsed in the subject period and each threshold value can be modified as appropriate, and it may be a linear function having an intercept or a quadratic function. Fig. 9 is a diagram showing a modification of each of Th1 and Th2. Referring to Fig. 9, Th2 shown with a line L4 is constant during the subject period. Th1 shown with a line L5 is also constant during the subject period. Th2 is larger than Th1 and smaller than demand upper limit value P1. Thus, each of Th1 and Th2 may be a fixed value.

Any length of the subject period can be set. The length of the subject period may be not shorter than five minutes and not longer than five hours. The length of the subject period may be approximately thirty minutes (for example, not shorter than fifteen minutes and not longer than forty-five minutes) or may be approximately two hours (for example, not shorter than one hour and not longer than three hours). The control system may continue control of the amount of power demand by setting, at the time of lapse of a certain subject period, the end time of that subject period, as the start time of a next subject period.

The first resource and the second resource can be changed as appropriate. For example, only one (for example, only air-conditioning equipment 210) of air-conditioning equipment 210 and EVSE 220 may function as the second resource. Alternatively, in addition to air-conditioning equipment 210 and EVSE 220 or instead of at least one of them, power load 230 may function as the second resource. In S26 in Fig. 3, power load 230 may be selected as the control target, and in following S27, power load 230 may perform the second adjustment operation. EMS controller 12 may control power load 230 such that, in S27, power consumption by power load 230 is restricted (which is denoted as an "operation Y4" below). In S27, at least one of operations Y1 to Y3 may be performed together with operation Y4.

The configuration of the facility shown in Fig. 1 can be modified as appropriate.

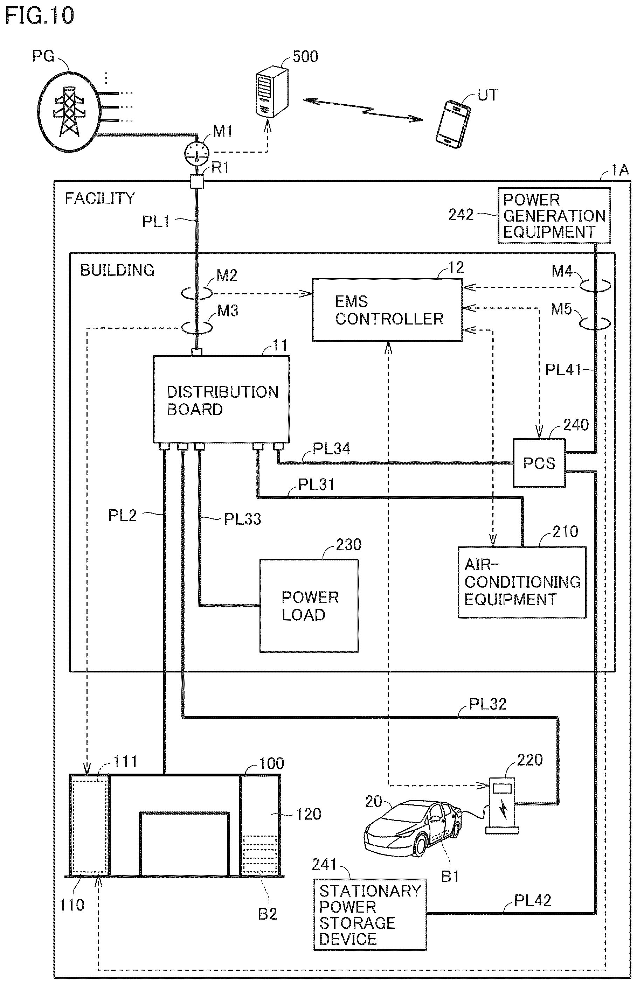

Fig. 10 is a diagram showing a first modification of the configuration of the facility shown in Fig. 1. A facility 1A shown in Fig. 10 is basically the same in configuration as facility 1 shown in Fig. 1. Facility 1A further includes a power conditioning system (PCS) 240, a stationary power storage device 241, and power generation equipment 242. PCS 240 is connected to distribution board 11 through a power line PL34. EMS controller 12 is communicatively connected to PCS 240.

Power generation equipment 242 is, for example, photovoltaic power generation equipment. Watt-hour meters M4 and M5 are provided at a power line PL41 through which power generation equipment 242 and PCS 240 are connected to each other. Each of watt-hour meters M4 and M5 detects an amount of electric power (amount of generated electric power) generated by power generation equipment 242. Watt-hour meter M4 successively outputs a signal indicating a detection value of the amount of generated electric power to EMS controller 12. Watt-hour meter M5 successively outputs a signal indicating a detection value of the amount of generated electric power to battery station 100 (controller 111). Power generation equipment 242 may include wind power generation equipment or a cogeneration system.

PCS 240 is connected to power storage device 241 through a power line PL42. PCS 240 includes various circuits for processing (for example, power conversion and input and output adjustment) involved with power conditioning. Electric power generated by power generation equipment 242 is stored in power storage device 241. PCS 240 converts electric power generated by power generation equipment 242 to electric power suitable for charging of power storage device 241, and has power storage device 241 charged with converted electric power. In addition, PCS 240 converts at least one of electric power generated by power generation equipment 242 and electric power discharged by power storage device 241 to prescribed AC power in accordance with an instruction from EMS controller 12, and outputs obtained AC power to distribution board 11.

In facility 1A, in addition to air-conditioning equipment 210, EVSE 220, and power load 230 or instead of at least one of them, power storage device 241 may function as the second resource. In S26 in Fig. 3, power storage device 241 may be selected as the control target, and in following S27, power storage device 241 may perform the second adjustment operation. EMS controller 12 may control power storage device 241 via PCS 240 such that, in S27, electric power stored in power storage device 241 is discharged (which is denoted as an "operation Y5" below) to building 10 (distribution board 11). In S27, at least one of operations Y1 to Y4 may be performed together with operation Y5.

In S14 and S24 in Fig. 3 (or S14A and S24A in Fig. 6), a value calculated by subtracting an integrated value of amounts of electric power generated by power generation equipment 242 in the subject period from an integrated value of amounts of electric power supplied from power grid PG to facility 1A in the subject period may be compared with each threshold value (Th1 or Th2).

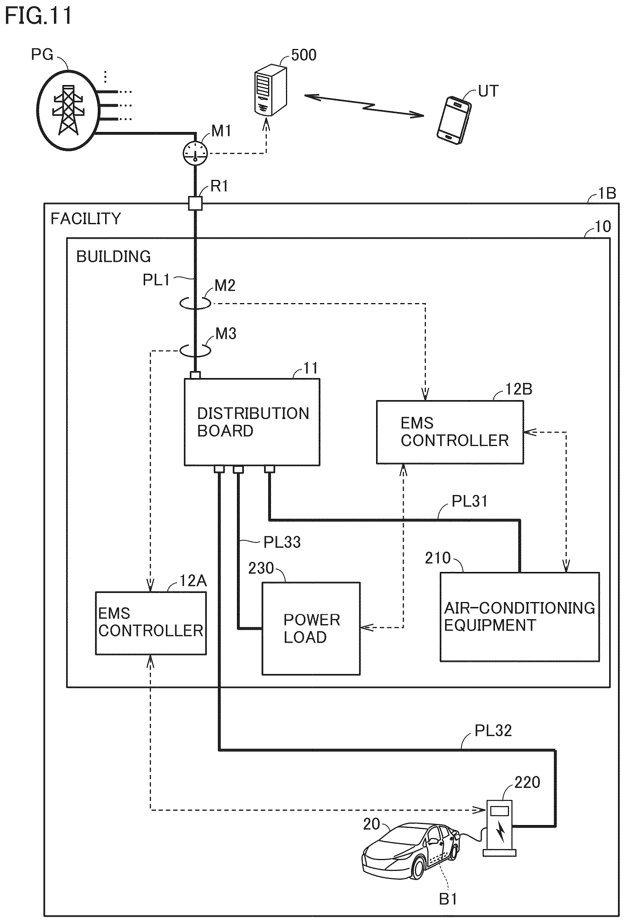

Fig. 11 is a diagram showing a second modification of the configuration of the facility shown in Fig. 1. A facility 1B shown in Fig. 11 includes EMS controllers 12A and 12B instead of EMS controller 12 and battery station 100. EMS controller 12A is a computer communicatively connected to EVSE 220. EMS controller 12B is a computer communicatively connected to each of air-conditioning equipment 210 and power load 230. EMS controller 12A is configured to control EVSE 220 independently of EMS controller 12B. A control signal is not exchanged between EMS controller 12A and EMS controller 12B. EMS controller 12A and EVSE 220 may be facilities subsequently added to facility 1B. A control logic of EMS controller 12A may be made a black box. EMS controller 12A may be a controller exclusive for EVSE 220. In this modification, EMS controller 12A and EMS controller 12B correspond to an exemplary "first controller" and an exemplary "second controller" according to the present disclosure, respectively. EVSE 220 functions as the first resource and air-conditioning equipment 210 functions as the second resource. EMS controller 12A may perform process flow F1 (Fig. 3) and EMS controller 12B may perform process flow F2 (Fig. 3). Alternatively, EMS controller 12A may perform process flow F1A (Fig. 6) and EMS controller 12B may perform process flow F2A (Fig. 6). Alternatively, EMS controller 12A may perform process flow F1 (Fig. 7) and EMS controller 12B may perform process flow F2B (Fig. 7). A method of charging by EVSE 220 is not limited to contact charging (plug-in charging) but may be wireless charging.

The second end condition can be modified as appropriate. For example, the second end condition may be satisfied not only when the subject period has elapsed but also when another requirement is satisfied.

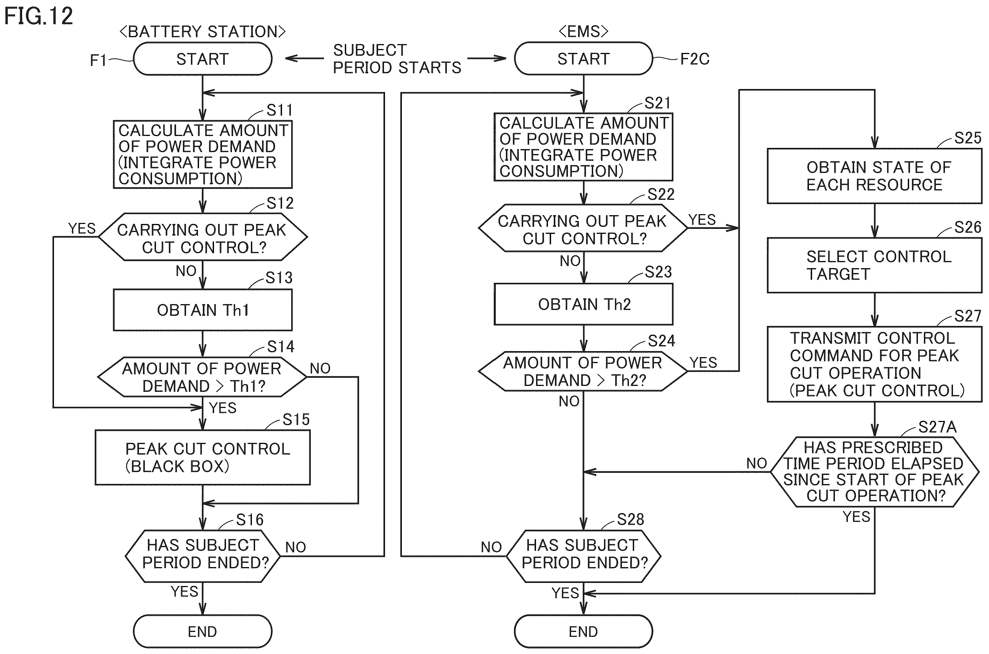

Fig. 12 is a flowchart showing a third modification of the processing shown in Fig. 3. Referring to Fig. 12, in this modification, as the start time of the subject period comes, controller 111 starts process flow F1 (the same as process flow F1 shown in Fig. 1) and EMS controller 12 starts a process flow F2C. Process flow F2C is the same as process flow F2 (Fig. 3) except for addition of S27A. In process flow F2C, as processing in S27 is performed, in following S27A, EMS controller 12 determines whether or not a prescribed time period has elapsed since start of the peak cut operation (second adjustment operation) by the second resource. When the prescribed time period has not elapsed since start of the second adjustment operation (NO in S27A), the process proceeds to S28. When the prescribed time period has elapsed since start of the second adjustment operation (YES in S27A), on the other hand, process flow F2C ends before the end time of the subject period. The second adjustment operation is thus no longer performed. According to such a configuration, excessive restriction of use of the resource is suppressed.

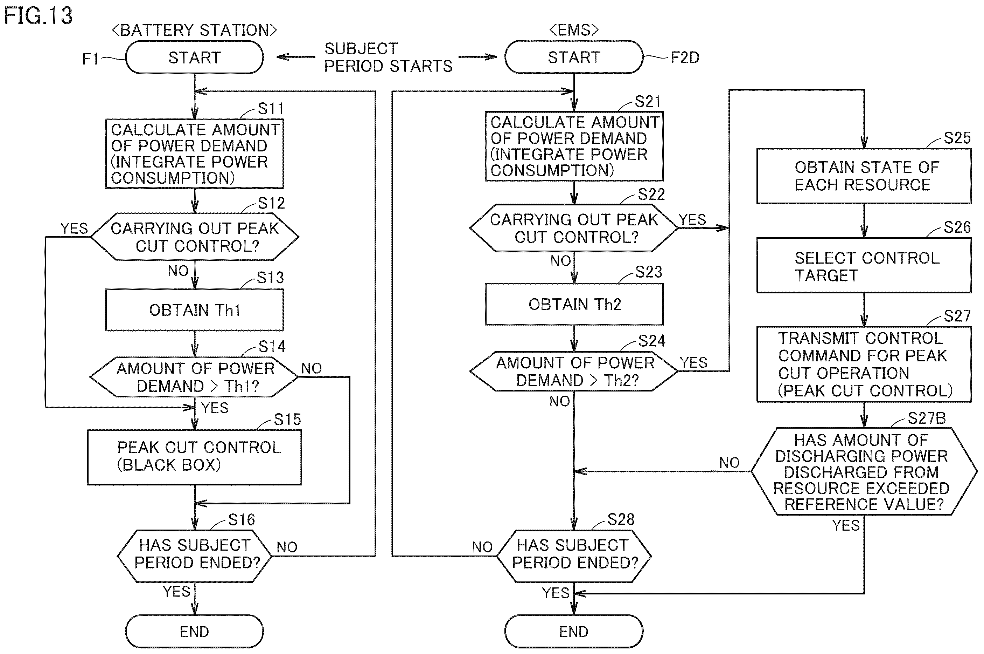

Fig. 13 is a flowchart showing a fourth modification of the processing shown in Fig. 3. Referring to Fig. 13, in this modification, as the start time of the subject period comes, controller 111 starts process flow F1 (the same as process flow F1 shown in Fig. 3) and EMS controller 12 starts a process flow F2D. Process flow F2D is the same as process flow F2 (Fig. 3) except for addition of S27B. In process flow F2D, as the processing in S27 is performed, in following S27B, EMS controller 12 determines whether or not an amount of discharging power (that is, an integrated value of amounts of electric power discharged from the second resource in the subject period) discharged from the second resource for the peak cut operation (second adjustment operation) has exceeded a prescribed reference value. When the amount of discharging power discharged from the second resource for the second adjustment operation has not exceeded the reference value (NO in S27B), the process proceeds to S28. When the amount of discharging power discharged from the second resource for the second adjustment operation has exceeded the reference value (YES in S27B), process flow F2D ends before the end time of the subject period. The second adjustment operation is thus no longer performed. According to such a configuration, shortage of an amount of electric power (an amount of power storage) that can be used at the time of failure at facility 1 is suppressed.

The process flow shown in each of Figs. 3, 6, 7, 8, 12, and 13 can be modified as appropriate. The order of processing may be changed or an unnecessary step may be omitted depending on a purpose. Contents of any processing may be modified or a step may be added.

Various modifications above may be carried out in any combination.

Though an embodiment of the present disclosure has been described, it should be understood that the embodiment disclosed herein is illustrative and non-restrictive in every respect. The scope of the present disclosure is defined by the terms of the claims and is intended to include any modifications within the scope and meaning equivalent to the terms of the claims.

## Claims

1. A control system configured to control an amount of power demand indicating an amount of electric power supplied from an external power supply (PG) to a supply target (1), the supply target including a first resource (100, 220) and a second resource (210, 220, 230, 241) configured to allow adjustment of the amount of power demand, the control system comprising:
a first controller (111, 12A) configured to control the first resource; and
a second controller (12, 12B) configured to control the second resource, wherein
the first controller is configured to control the first resource independently of the second controller,
upon satisfaction of a first start condition, one of the first resource and the second resource starts a first adjustment operation to suppress increase in the amount of power demand (F1, F2A), and
upon further satisfaction of a second start condition in addition to the first start condition, the other of the first resource and the second resource starts a second adjustment operation to suppress increase in the amount of power demand (F2, F1A, F2B, F2C, F2D).

2. The control system according to claim 1, wherein
the first controller (111) is configured to control the first resource (100) to start the first adjustment operation upon satisfaction of the first start condition and to continue the first adjustment operation until satisfaction of a first end condition (F1),
the second controller (12) is configured to control the second resource (210, 220) to start the second adjustment operation upon satisfaction of both of the first start condition and the second start condition and to continue the second adjustment operation until satisfaction of a second end condition (F2, F2B),
the first start condition is satisfied when the amount of power demand exceeds a first threshold value (Th1), and
the second start condition is satisfied when the amount of power demand exceeds a second threshold value (Th2) larger than the first threshold value.

3. The control system according to claim 2, wherein
the amount of power demand is an integrated value of amounts of electric power supplied from the external power supply (PG) to the supply target (1) in a subject period, and
each of the first end condition and the second end condition is satisfied at time of lapse of the subject period.

4. The control system according to any of claims 2 or 3, wherein
the first controller (111) is configured to determine the first threshold value (Th1) based on a first expression (L3) indicating relation of proportionality at a first proportionality constant, between time elapsed in the subject period and the first threshold value,
the second controller (12) is configured to determine the second threshold value (Th2) based on a second expression (L2) indicating relation of proportionality at a second proportionality constant, between time elapsed in the subject period and the second threshold value,
the first controller is configured to change the first proportionality constant in accordance with a request from a user but not to change the first expression unless the first controller receives the request from the user, and
the second controller is configured to change the second proportionality constant within a range larger than the first proportionality constant.

5. The control system according to any of claims 2 to 4, wherein
the first controller (111) is configured to change the first threshold value in response to an input from a user but not to change the first threshold value in response to an input from the second controller (12).

6. The control system according to any one of claims 1 to 5, wherein
the first resource includes a battery station (100), the battery station holding a replacement battery (B2) replaceable with a vehicle-mounted battery (B1), the battery station being configured to provide the replacement battery,
the first controller is a computer (111) mounted on the battery station,
the second resource includes power feed equipment (220) for a vehicle and air-conditioning equipment (210), and
the second controller is a computer (12) communicatively connected to each of the power feed equipment and the air-conditioning equipment.

7. The control system according to claim 6, wherein
the first adjustment operation includes at least one of
restriction of power consumption by the battery station (100), and discharging by the battery station (100), of electric power stored in the replacement battery (B2), and
the second adjustment operation includes at least one of
restriction of power consumption by the air-conditioning equipment (210),
restriction of power consumption by the power feed equipment (220), and
discharging of electric power stored in a battery of a vehicle connected to the power feed equipment (220).

8. The control system according to any one of claims 1 to 5, wherein
the first resource includes power feed equipment (200) for a vehicle,
the first controller is a computer (12A) communicatively connected to the power feed equipment,
the second resource includes air-conditioning equipment (210), and
the second controller is a computer (12B) communicatively connected to the air-conditioning equipment.

9. The control system according to any one of claims 2 to 5, wherein
the second controller (12) is configured to specify the first start condition by learning an operation by the first resource (100) and to set the second start condition based on the specified first start condition (F2B).

10. The control system according to claim 1, wherein
the first resource includes a battery station (100), the battery station holding a replacement battery (B2) replaceable with a vehicle-mounted battery (B1), the battery station being configured to provide the replacement battery,
the first controller is a computer (111) mounted on the battery station,
the second resource includes air-conditioning equipment (210),
the second controller is a computer (12) communicatively connected to the air-conditioning equipment,
the second controller is configured to control the second resource to start the first adjustment operation upon satisfaction of the first start condition and to continue the first adjustment operation until satisfaction of a first end condition (F2A), and
the first controller is configured to control the first resource to start the second adjustment operation upon satisfaction of both of the first start condition and the second start condition and to continue the second adjustment operation until satisfaction of a second end condition (F1A).

11. The control system according to claim 10, wherein
the amount of power demand is an integrated value of amounts of electric power supplied from the external power supply to the supply target in a subject period,
the first start condition is satisfied when the amount of power demand exceeds a first threshold value (Th1),
the second start condition is satisfied when the amount of power demand exceeds a second threshold value (Th2) larger than the first threshold value, and
each of the first end condition and the second end condition is satisfied at time of lapse of the subject period.

12. A method of controlling an amount of power demand indicating an amount of electric power supplied from an external power supply (PG) to a supply target (1), the supply target including a first resource (100, 220) and a second resource (210, 220, 230, 241) configured to allow adjustment of the amount of power demand, the method comprising:
starting, by one of the first resource and the second resource, a first adjustment operation to suppress increase in the amount of power demand upon satisfaction of a first start condition (F1, F2A); and
starting, by the other of the first resource and the second resource, a second adjustment operation to suppress increase in the amount of power demand upon further satisfaction of a second start condition in addition to the first start condition (F2, F1A, F2B, F2C, F2D).
